# EUROPÄISCHE PATENTSCHRIFT

(11) **EP 2 955 335 B1**
(45) Veröffentlichungstag und Bekanntmachung des Hinweises auf die Patenterteilung: **16.08.2017**
(21) Anmeldenummer: 15161557.2
(22) Anmeldetag: 30.03.2015
(51) Int. Cl.: F01D 17/16, F04D 29/00

(54) **LEITSCHAUFELKRANZ, LEITSCHAUFEL, INNENRING UND STRÖMUNGSMASCHINE**
GUIDE BLADE ASSEMBLY, GUIDE BLADE, INNER RING AND FLUID FLOW ENGINE
STATOR, AUBE DIRECTRICE, BAGUE INTÉRIEURE ET TURBOMACHINE

(30) Priorität: 31.03.2014 DE 102014205986
(43) Veröffentlichungstag der Anmeldung: 16.12.2015
(73) Patentinhaber: MTU Aero Engines AG, 80995 München (DE)
(72) Erfinder: Humhauser, Werner, 85368 Moosburg (DE); Klingels, Hermann, 85221 Dachau (DE)

(56) Entgegenhaltungen:
- EP-A1- 2 696 041
- EP-A2- 1 312 764
- US-A- 5 421 703
- US-A1- 2014 234 085

## Beschreibung

Die Erfindung betrifft einen verstellbaren Leitschaufelkranz für eine Strömungsmaschine nach dem Oberbegriff des Patentanspruchs 1, eine Leitschaufel und einen Innenring für einen verstellbaren Leitschaufelkranz, sowie eine Strömungsmaschine.

Strömungsmaschinen wie Flugzeugtriebwerke und stationäre Gasturbinen haben zur Einstellung optimaler Betriebsbedingungen regelmäßig zumindest eine verdichterseitige verstellbare Leitschaufelreihe mit einer Vielzahl von um ihre Hochachse verschwenkbaren Leitschaufeln. Die Leitschaufelreihe bildet mit einem Innenring einen sogenannten verstellbaren Leitschaufelkranz. Der Innenring dient zur Stabilisierung der Leitschaufeln und weist eine Vielzahl von radialen Öffnungen oder Ausnehmungen zur Aufnahme jeweils eines schaufelseitigen Lagerzapfens auf. Die äußere Lagerung der Leischaufeln sowie deren Betätigung erfolgt über Verstellzapfen der Leitschaufeln, die mit einer entsprechenden Verstelleinrichtung zusammenwirken. In den Öffnungen bzw. Ausnehmungen des Innenrings sind Lagerbuchsen eingesetzt, in denen die Lagerzapfen geführt sind. In der DE 10 2006 024 085 A1 wird vorgeschlagen, den Innenring aus zwei halbkreisförmigen Ringsegmenten zu bilden und diese einzeln über den Lagerzapfen der in Gehäusehälften montierten Leitschaufeln abzurollen. Hierzu werden die Ringsegmente auf einen konstanten Spannradius vorgespannt, im Bereich der Lagerzapfen positioniert und dann entspannt. Nach dem Abrollen der halbkreisförmigen Ringsegmente wird ein Dichtungsträger auf diese aufgeschoben. Eine Demontage des Innenrings bzw. des Leitschaufelkranzes erfolgt auf analoge Art und Weise. Die Verformung und Positionierung der Innenringsegmente können über eine in der DE 10 2009 004 934 A1 gezeigte Spannvorrichtung erfolgen.

In der EP 1 319 844 B1 ist ein Innenring für einen verstellbaren Leitschaufelkranz gezeigt, der axial geteilt ist und somit in Strömungsrichtung eines Primärstroms betrachtet ein vorderes Ringsegment und ein hinteres Ringsegment aufweist. Radiale Ausnehmungen zur Aufnahme von Lagerbuchsen und somit der Lagerzapfen sind jeweils hälftig in den Ringsegmenten ausgebildet, die über zwischen den Ausnehmungen angeordneten Schrauben-Mutter-Verbindungen lösbar miteinander verbunden sind.

In der GB 1 049 080 A ist ein Leitschaufelkranz gezeigt, dessen Leitschaufeln über einen verhältnismäßig kurzen Lagerzapfen in Vertiefungen eines Innenrings gelagert sind. Weiterer Stand der Technik ist aus der US 7 588 415 B2, der DE 195 18 203 A1, der DE 10 2009 038 A1 und aus der DE 28 10 240 C2 bekannt.

Die US 2014/234085 A1 zeigt einen Leitschaufelkranz einer Strömungsmaschine, bei dem verstellbare Leitschaufeln über innere Lagerzapfen in innenringseitigen Lagerbuchsen gelagert sind. Die Lagerzapfen erstrecken sich von Schaufeltellern radial nach innen.

Es hat sich jedoch gezeigt, dass durch diese bekannten Bauweisen die Verwendung eines Leitschaufelkranzes in einer Strömungsmaschine mit kleinem bzw. reduziertem Bauraum erschwert bzw. nicht ermöglicht ist.

Aufgabe der Erfindung ist es, einen verstellbaren Leitschaufelkranz für eine Strömungsmaschine zu schaffen, der die Verwendung in geometrisch kleinen Verdichtern ermöglicht. Zudem ist es Aufgabe der Erfindung, eine Leitschaufel sowie einen Innenring für einen derartigen Leitschaufelkranz zu schaffen. Ferner ist es Aufgabe der Erfindung, eine Strömungsmaschine zu schaffen, die einen geometrisch kleinen Verdichter mit einem verstellbaren Leitschaufelkranz aufweist.

Diese Aufgabe wird gelöst durch einen verstellbaren Leitschaufelkranz mit den Merkmalen des Patentanspruchs 1, durch eine Leitschaufel mit den Merkmalen des Patentanspruchs 12, durch einen Innenring mit den Merkmalen des Patentanspruchs 13 und durch eine Strömungsmaschine mit den Merkmalen des Patentanspruchs 14.

Ein erfindungsgemäßer verstellbarer Leitschaufelkranz einer Strömungsmaschine hat eine Vielzahl von eine Leitschaufelreihe bildenden Leitschaufeln und einen Innenring zum Stabilisieren der Leitschaufelreihe. Die Leitschaufeln haben jeweils bezogen auf eine Kranzlängsachse einen radial äußeren Verstellzapfen zum Zusammenwirken mit einer Verstelleinrichtung. Zudem sind die Leitschaufeln mit radial inneren Schaufeltellern in Lagerausnehmungen des Innenrings aufgenommen. Die radial inneren Schaufelteller wirken als Lagerzapfen, wobei sie und/oder die Lagerausnehmungen an ihren Lagerflächen beschichtet sind und die Schaufelblätter bezogen auf ihre inneren Schaufelteller einen hinterkantenseitigen Überhang haben, wobei eine radiale Schaufeltellerhöhe stromabwärts eines Primärstroms zunimmt. Die radiale Höhe der Schaufelteller am Eintritt, d.h. die geringste Schaufeltellerdicke, beträgt zwischen 15% bis 30% der Schaufeltellerdurchmesser.

Der Wegfall von radial inneren Lagerzapfens und deren Lagerbuchsen und stattdessen die unmittelbare Lagerung der Leitschaufeln über ihre inneren Schaufelteller in dem Innenring ermöglicht, den Innenring mit einer reduzierten radialen Höhe im Vergleich zu den bekannten Innenringen auszubilden, was die Verwendung in Kleinverdichtern ermöglicht. Zudem werden durch die reduzierte Teileanzahl Leckageverluste, Gewicht und Kosten des Leitschaufelkranzes reduziert. Durch Entfall der Lagerzapfen und Lagerbuchsen wird ein radialer Bauraum gewonnen, der beispielsweise für Verbindungselemente zum Verbinden der Ringsegmente dienen kann. Die Verbindungselemente können dabei derart angeordnet werden, dass eine leichte Zugänglichkeit zu ihnen erfolgt und somit eine einfache Montage ermöglicht ist. Die Beschichtung der Schaufelteller und/oder der Lagerausnehmungen an ihren Lagerflächen bewirkt eine Reduzierung von Reibverlusten bzw. eine Erhöhung der Standfestigkeit. Durch Zunahme der Schaufeltellerhöhe in Richtung des Primärstroms wird bei verdichterseitiger Anordnung die Ringraumgeometrie berücksichtigt. Der stromabwärtige Schaufelblattüberhang bezogen auf die inneren Schaufelteller bewirkt zudem bei einer geringen Verstellung eine große Strömungsbeeinflussung.

Eine als Lagerfläche wirkende Außenumfangsfläche der Schaufelteller ist bevorzugterweise über ihre gesamte radiale Höhe zylinderförmig. Hierdurch werden außenumfangsseitige Stufen im Schaufelteller vermieden.

Zum Ausgleich von beispielsweise unterschiedlichen Wärmeausdehnungen zwischen dem Innenring und den Schaufeln ist es vorteilhaft, wenn die Schaufelteller vom Grund der Lagerausnehmungen beabstandet sind. Hierdurch wird ein Klemmen in radialer Richtung verhindert.

Die Montage des Leitschaufelkranzes lässt sich einfach gestalten, wenn der Innenring axial geteilt und in Richtung des Primärstroms ein vorderes Ringsegment und ein hinteres Ringsegment hat in denen jeweils hälftig die Lagerausnehmungen ausgebildet sind. Hierdurch kann der Leitschaufelkranz ohne elastische Vorformung seines Innenrings montiert werden. Selbstverständlich können die Ringsegmente auch in Umfangsrichtung geteilt sein und der Innenring kann nicht nur eine axiale Teilung, sondern auch eine umfangsseitige Teilung aufweisen und somit aus beispielsweise vier Ringbodensegmenten bestehen.

Die Montage der Ringsegmente lässt sich zudem vereinfachen, wenn sie jeweils zumindest einen zu den Lagerausnehmungen radial nach innen versetzten Flansch zum gegenseitigen Zusammenfügen aufweisen. In den Flanschen können eine Vielzahl von Bohrungen zur Aufnahme von Verbindungselementen wie Schrauben und/oder Nieten ausgebildet sein.

Ein radial inneres Umströmen des Innenrings durch einen Sekundärstrom bzw. eine stromabwärtige Vermischung des Primärstroms mit einem Sekundärstrom lässt sich zumindest reduzieren, wenn das hintere Ringsegment stromabwärts einen, von einer primärstromseitigen Segmentenfläche radial nach innen weg zeigenden, beispielsweise abgewinkelten, Endabschnitt aufweist. Bevorzugterweise tritt der Sekundärstrom saugseitig aus den jeweiligen Schaufeltellern aus. Alternativ bzw. zusätzlich kann der Sekundärstrom auch druckseitig aus dem jeweiligen Sahaufeltellern in den Ringraum austreten.

Die Umströmung bzw. Vermischung lässt sich vollständig im Bereich des hinteren Ringsegmentes verhindern, wenn ein Radialspalt zwischen dem Endabschnitt und einem gegenüberliegenden Rotorabschnitt durch eine Dichteinrichtung geschlossen ist.

Bevorzugterweise ist die Dichteinrichtung mittels eines an dem Innenring angeordneten Haltering lagegesichert. Dabei ist es besonders vorteilhaft, wenn der Haltering und die Ringsegmente mit gleichen Verbindungselementen miteinander verbunden sind, so dass für den Haltering keine zusätzlichen Verbindungsmittel und auch keine gesonderten Montageschritte notwendig sind. Ein separates Aufschieben bzw. ein separat auf den Innenring aufzuschiebender Dichtungsträger entfällt.

Um in einem Bereich stromaufwärts des Leitschaufelkranzes eine Vermischung des Primärstroms mit dem Sekundärstrom vollständig bzw. nahezu vollständig zu unterbinden, kann das vordere Ringsegment einen stromaufwärtigen Vorsprung zur axialen Überlappung mit einem Körperabschnitt einer stromaufwärtigen Laufschaufelreihe der jeweiligen Strömungsmaschine haben.

Eine Zumischung des Sekundärstroms zum Primärstrom lässt sich gezielt dadurch einstellen, wenn sich durch den Innenring Sekundärstromzuführungen erstrecken. Die Sekundärzustromzuführungen können sich durch den Innenring zwischen den Lagerausnehmungen erstrecken und/oder ebenfalls durch die Lagerausnehmungen, wobei dann die Schaufelteller mit entsprechenden Führungskanälen versehen sind. Die Führungskanäle sind bei einem Ausführungsbeispiel derart, dass unabhängig vom Verstellwinkel bzw. Anstellwinkel der Leitschaufeln ein Sekundärstrom zugeführt werden kann. Bei einem alternativen Ausführungsbeispiel sind die Führungskanäle derart, dass nur in einem bestimmten Anstellwinkelbereich ein Sekundärstrom zugeführt werden kann. Hierdurch können sich zusätzliche Aerovorteile ergeben,

Das Gewicht des Leitschaufelkranzes bzw. der Leitschaufeln lässt sich beispielsweise dadurch reduzieren, dass zumindest einige Schaufelteller einen Hohlraum aufweisen. Um einen Strömungseinzug in die Hohlräume zu vermeiden ist es vorteilhaft, wenn die Hohlräume in eine einer Bodenfläche der Lagerausnehmungen gegenüberliegende Stirnfläche der Schaufelteller eingebracht sind.

Eine bevorzugte Leitschaufel für einen erfindungsgemäßen verstellbaren Leitschaufelkranz ist lagerzapfenfrei, wobei Schaufeltellerflächen als Lagerflächen wirken.

Ein bevorzugter Innenring für einen erfindungsgemäßen Leitschaufelkranz hat eine Vielzahl von Lagerausnehmungen zur Aufnahme von Schaufeltellern von Leitschaufeln, wobei zumindest die umfangsseitigen Lagerausnehmungsflächen als Lagerflächen wirken.

Eine bevorzugte Strömungsmaschine hat zumindest einen erfindungsgemäßen verstellbaren Leitschaufelkranz und weist bzw. ermöglicht somit verdichterseitig eine kompakte Bauweise und darüber hinaus eine einfache Montage.

Sonstige vorteilhafte Ausführungsbeispiele der Erfindung sind Gegenstand weiterer Unteransprüche.

Im Folgenden werden bevorzugte Ausführungsbeispiele der Erfindung anhand von schematischen Darstellungen näher erläutert. Es zeigen:
- Figur 1: einen Längsschnitt durch eine Strömungsmaschine im Bereich eines ersten Ausführungsbeispiels eines verstellbaren Leitschaufelkranzes,
- Figur 2: einen Längsschnitt durch eine Strömungsmaschine im Bereich eines zweiten Ausführungsbeispiels des erfindungsgemäßen verstellbaren Leitschaufelkranzes, und
- Figur 3: eine Draufsicht auf einen abgewickelten Umfangsabschnitt des Leitschaufelkranzes gemäß Figur 2.

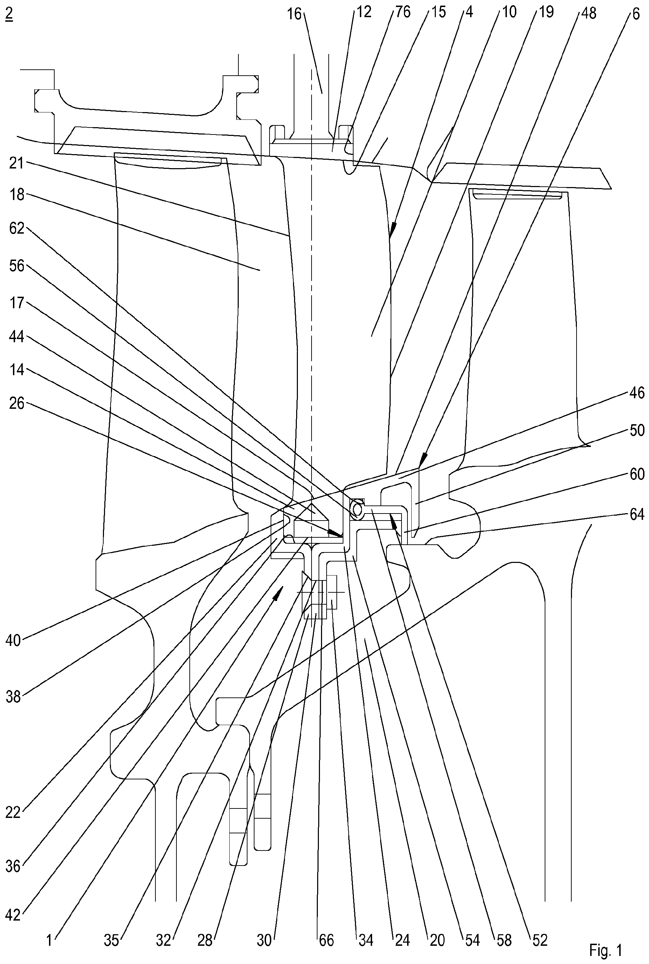

Gemäß der Darstellung in Figur 1 hat ein erstes Ausführungsbeispiel eines erfindungsgemäßen Leitschaufelkranzes 1 einer Strömungsmaschine 2, beispielsweise ein Flugzeugtriebwerk, eine Vielzahl von Leitschaufeln 4 und einen Innenring 6. Der Leitschaufelkranz 1 ist hier verdichterseitig angeordnet und weist beispielsweise bis zu 320 Leitschaufeln 4 auf. Er ist so in der Strömungsmaschine 2 ausgerichtet, dass er mit seiner Kranzlängsachse auf einer Rotorlängsachse bzw. Längsachse der Strömungsmaschine 1 liegt.

Die Leitschaufeln 4 bilden eine Leitschaufelreihe und sind um ihre sich in radialer Richtung zur Kranzlängsachse erstreckenden strichpunktiert angedeuteten Hochachse verstellbar. Sie haben jeweils ein Schaufelblatt 10, einen äußeren Schaufelteller 12, einen inneren Schaufelteller 14 sowie einen äußeren Verstellzapfen 16. Die Schaufelteller 12, 14 haben einen Kreisumfang und dienen mit ihren gegenüberliegendenTellerflächen 15, 17 zur radialen Begrenzung eines die Schaufelblätter 10 aufnehmenden Ringraums 18. Der Ringraum 18 wird in dem gezeigten Ausführungsbeispiel von einem Primärstrom von links nach rechts durchströmt Der Primärstrom ist hier ein zu verdichteter Luftstrom. Die Schaufelblätter 10 bilden einen hinterkantenseitigen Überhang und sind somit mit ihren Hinterkanten 19 stromabwärts der inneren Schaufelteller 14 angeordnet. Mit ihren Vorderkanten 21 befinden sie sich axial "auf" den inneren Schaufeltellern 14. Die Verstellzapfen 16 erstrecken sich bezogen auf die Kranzlängsache bzw. Strömungsmaschinenlängachse radial nach außen rückseitig von den äußeren Schaufeltellern 12 und wirken mit einer nicht gezeigten Verstelleinrichtung außerhalb des Ringraums 18 zusammen. Erfindungsgemäß haben die Leitschaufeln 4 keinen Lagerzapfen zur radial inneren Lagerungen und sind somit lagerzapfenfrei. Die innere Lagerung der Leitschaufeln 4 erfolgt erfindungsgemäß über ihre inneren Schaufelteller 14 unmittelbar im Zusammenwirken mit dem Innenring 6. Eine detaillierte Beschreibung der inneren Schaufelteller 14 erfolgt im Folgenden.

Der Innenring 6 umgreift einen Rotorabschnitt 20 der Strömungsmaschine 1 und ist von diesem radial beabstandet. Er dient zur radial inneren Stabilisierung der Leitschaufeln 4. Er ist axial geteilt und hat somit in Strömungsrichtung des Primärstroms ein stromaufwärtiges bzw. vorderes Ringsegment 22 und ein stromabwärtiges bzw. hinteres Ringsegment 24. Der Innenring 6 weist eine Vielzahl von Lagerausnehmungen 26 auf, die in Umfangsrichtung gleichmäßig voneinander beabstandet sind und abschnittsweise in dem vorderen Ringsegment 22 und dem hinteren Ringsegment 24 angeordnet sind.

Die Ringsegmente 22, 24 sind in dem hier gezeigten Ausführungsbeispiel über den Umfang geschlossen und umspannen somit einen Winkel von 360°. Zur Montage bzw. zum Bilden des Innenrings 4 haben sie jeweils einen zu den Lagerausnehmungen 26 radial innenliegenden Flansch 28, 30 bzw. Flanschring, in denen einen Vielzahl von axialen Flanschbohrungen 32 zur Aufnahme jeweils eines Verbindungselementes 34 eingebracht ist. Beispielhafte Verbindungselemente sind Schrauben, Schraubbolzen und Nieten, deren Köpfe oder Muttern in einer konischen Erweiterung 35 des Flansches 28 versenkt sein können.

Die Lagerausnehmungen 26 sind hälftig in den Ringsegmenten 22, 24 ausgebildet. Sie dienen zur Aufnahme der inneren Schaufelteller 14 und bilden zusammen mit diesen jeweils eine radial innere Lagerstelle. Sie haben jeweils eine Bodenfläche 36 und eine halbzylinderförmige Innenumfangsfläche 38. Aufgrund der bevorzugten hälftigen Anordnung bildet dabei jedes Ringsegment 22, 24 einen Umfangswinkel von 180° aus. Die Innenumfangsflächen 32 der Lagerausnehmungen 26 wirken zusammen als zylinderförmige Lagerflächen und können mit einer entsprechenden Gleitbeschichtung versehen sein. Die Bodenfläche 36 bilden zusammen einen kreisrunden Grund.

Die inneren Schaufelteller 14 haben jeweils über ihre gesamte radiale Höhe eine zylinderförmige Außenumfangsfläche 40, die entsprechende Lagerflächen bilden und sich im montierten Zustand in Gleitanlage mit den Innenumfangsflächen 38 der Lagerausnehmungen 26 befinden. Bevorzugterweise sind die Außenumfangsflächen 40 der inneren Schaufelteller 14 ebenfalls mit einer Gleitbeschichtung versehen. In einer dem Lagerausnehmungsgrund jeweils zugewandten Stirnfläche 42 der inneren Schaufelteller 14 ist ein sich in radialer Richtung erstreckender Hohlraum 44 zur Gewichtsreduzierung eingebracht. Der Hohlraum 44 ist beilspielsweise eine Sacklochbohrung. Zum Ausgleich von beispielsweise unterschiedlichen thermischen Längenänderungen sind die Schaufelteller im montierten Zustand mit ihren Stirnflächen 42 radial vom Grund der Lagerausnehmungen beabstandet.

Die inneren Schaufelteller 14 wirken als Lagerzapfen. Dabei wirken ihre zylindrischen Außenumfangsflächen 40 und die Innenumfangsflächen 38 der Lagerausnehmungen 26 als zusammenwirkende Lagerflächen. Sie haben stromaufwärts eine geringe radiale Höhe und stromabwärts eine große radiale Höhe. Die Höhe wird dabei von der Stirnfläche 42 bis zu Tellerflächen 17 gemessen, die den Ringraum 18 begrenzen. Die inneren Schaufelteller 14 sind somit keilförmig und folgen einer Ringraumgeometrie. Mit ihrer Stirnfläche 42 verlaufen sie in Richtung der Kranzlängsachse. Bevorzugterweise sind die Tellerflächen 17 elliptisch ausgebildet. Die radiale Höhe der Schaufelteller am Eintritt, d.h. die geringste Tellerdicke, beträgt zwischen 15% bis 30% der Schaufeltellerdurchmesser.

Das hintere Ringsegment 24 hat stromabwärts der Lagerausnehmungen 26 eine axiale Verlängerung 46, von deren ringraumseitigen bzw. primärstromseitigen Segmentfläche 48 die Schaufelblätter 10 über jeweils einen nicht bezifferten Spalt beabstandet sind. Die Verlängerung 46 geht in einen in Richtung des Rotorabschnittes 20 zeigenden bzw. abgewinkelten Endabschnitt 50 über. Der Endabschnitt 50 erstreckt sich somit radial nach innen weg bzw. rückseitig von der primärstromseitigen Segmentenfläche 48. Das hintere Ringsegment 24 führt grundsätzlich die in Strömungsrichtung ansteigende Schrägstellung der Tellerfläche 17 fort und endet somit radial außen zum inneren Ringsegment 22.

Zum Abdichten eines Spaltes zwischen dem Rotorabschnitt 20 und dem Endabschnitt 50 ist eine Dichteinrichtung 52 vorgesehen, die sich in Umfangsrichtung erstreckt und zwischen dem hinteren Ringsegment 24 und einem Haltering 54 angeordnet ist. Insbesondere hat die Dichteinrichtung 52 einen Fußabschnitt 56, einen axialen Verbindungsabschnitt 58 und einen radialen nach innen weisenden Dichtungsabschnitt 60. Der Fußabschnitt 56 ist gegenüber dem Verbindungsabschnitt 58 querschnittserweitert und zwischen dem hinteren Ringsegment 24 und dem Haltering 54 eingespannt, wobei er in eine Ringnut 62 des hinteren Halterings 54 eintaucht. Der Verbindungabschnitt 58 erstreckt sich zwischen dem Fußabschnitt 56 und dem Dichtungsabschnitt 60 und verbindet somit den Dichtungsabschnitt 60 mit dem Fußabschnitt 56. Der Dichtungsabschnitt 60 ist vorn Verbindungsabschnitt 58 radial nach innen abgewinkelt und hat in etwa den gleichen Querschnitt wie der Verbindungsabschnitt 58. Er befindet sich im montierten Zustand kopfseitig in Anlage und somit im Schleifkontakt mit einer Art Sockelfläche 64 des Rotorabschnitts 20, so dass der Spalt zwischen dem Rotorabschnitt 20 und dem Endabschnitt 50 fluidtechnisch geschlossen ist.

Der Haltering 54 ist konturnah entlang des hinteren Ringsegmentes 24 geführt und weist eine Vielzahl von Bohrungen 66 auf, die eine derartige Teilung bzw. umfangsseitige Beabstandung voneinander aufweisen, dass im montierten Zustand die Bohrungen 66 fluchtend zu den Flanschbohrungen 32 positioniert sind. Hierdurch ist der Haltering 54 mit den Verbindungselementen 34, mit denen bereits die Ringsegmente 22, 24 zum Innenring 6 gefügt sind, an dem hinteren Ringsegment 24 angebunden.

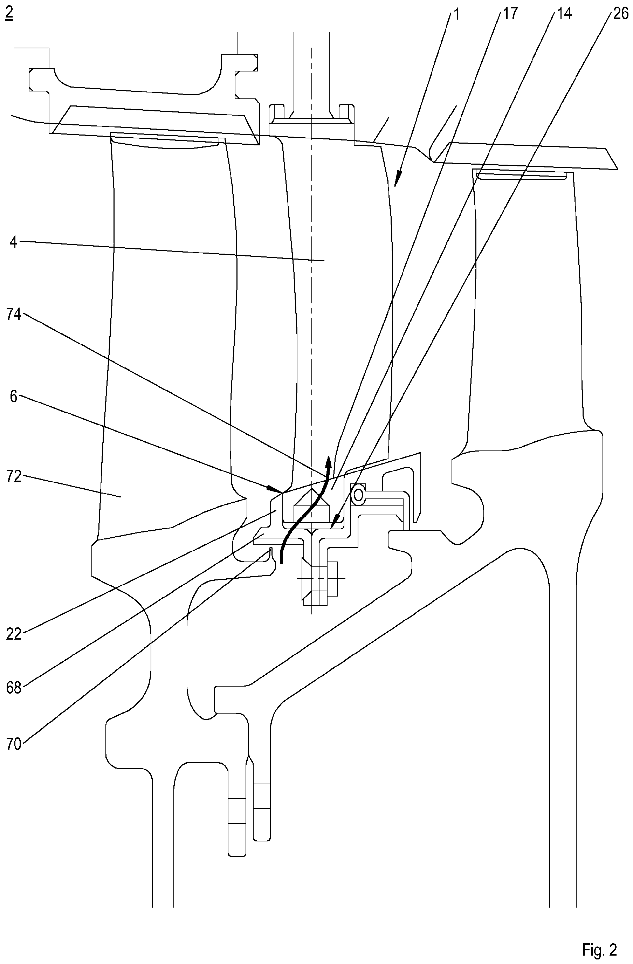

In Figur 2 ist ein zweites Ausführungsbeispiel des erfindungsgemäßen verstellbaren Leitschaufelkranzes 1 mit lagerzapfenfreien Leitschaufeln 4 und einem axial geteilten Innenring 6 montiert in einer Strömungsmaschine 2 skizziert. Im Folgenden werden die Unterschiede zwischen dem ersten und dem zweiten Ausführungsbeispiel genannt.

Im Unterschied zum ersten Ausführungsbeispiel nach Figur 1 hat beim zweiten Ausführungsbeispiel nach Figur 2 ein vorderes Ringsegment 22 des Innenrings 6 einen sich in Umfangsrichtung erstreckenden stromaufwärtigen Vorsprung 68. Der Vorsprung 68 verläuft radial innen zu Lagerausnehmungen 26 des Innenrings 6 und hat eine derartige axiale Erstreckung entlang einer Kranzlängsachse bzw. einer Strömungsmaschinenlängsachse, dass er sich im montierten Zustand in axialer Überlappung mit einem rotorseitigen umlaufenden Dichtsteg 70 einer stromaufwärtigen Laufschaufelreihe 72 befindet.

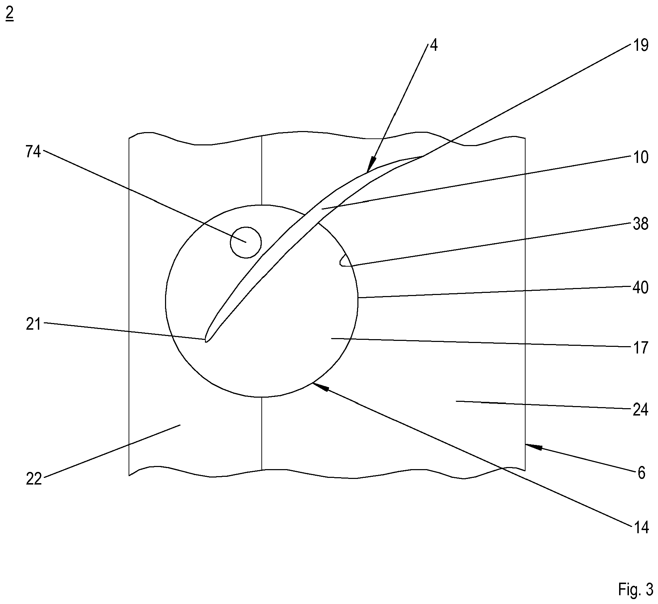

Im weiteren Unterschied zum ersten Ausführmgsbeispiel nach Figur 1 hat beim zweiten Ausführungsbeispiel nach Figur 2 der Innenring 6 zur Zumischung von Leckageluft bzw. eines Sekundärstroms zum Primärstrom eine Vielzahl von durch einen Pfeil angedeutete Sekundärstromzuführungen 74. Die Sekundärstromzuführungen 74 erstrecken sich schräg durch den Innenring 6, wobei ihre radial inneren Eingänge jeweils stromaufwärts ihrer radial äußeren Ausgänge angeordnet sind. Sie sind bevorzugterweise in einem Innenringbereich zwischen den Lagerausnehmungen 28 ausgebildet, können jedoch auch die inneren Schaufelteller 14 der Leitschaufeln 4 durchsetzen. Wie in Figur 3 gezeigt, treten die Sekundärstromzuführungen 74 hier saugseitig aus den inneren Schaufeltellern 14 aus. Ihre Austritte sind aus fertigungstechnischen Gründen bevorzugterweise kreisrund, können jedoch auch oval, geschlitzt und dergleichen sein. Die Geometrie der Austritte richtet sich insbesondere nach den zu erzielenden Strömungs- bzw. Aeroeffekten.

Die Montage des verstellbaren Leitschaufelkranzes erfolgt durch ein Einsetzen der Leitschaufeln 4 mit ihren Verstellzapfen in hierfür vorgesehene, in Figur 1 bezifferte gehäuseseitige Aufnahmen 76 und einem anschließenden Umlegen des vorderen Ringsegments 22 und des hinteren Ringsegments 24 mit ihren Lagerausnehmungsabschnitten um die inneren Schaufelteller 14 der Leitschaufeln 4 mit abschließender Verschraubung, Vernietung, Verstiftung und dergleichen. Wenn die Dichteinrichtung 52 vorgesehen ist, wird diese vor der beispielhaften Verschraubung über den Haltering 54 positioniert und dieser dann zusammen mit den Ringsegmenten 22, 24 mittels den gleichen Verbindungselementen 34 verschraubt.

Offenbart ist ein verstellbarer Leitschaufelkranz einer Strömungsmaschine mit einem Innenring, deren Leitschaufeln jeweils einen als Lagerzapfen wirkenden radial inneren Schaufelteller mit in Strömungsrichtung zunehmender Tellerdicke haben, eine Leitschaufel sowie ein Innenring für einen derartigen Leitschaufelkranz, sowie eine Strömungsmaschine.

### Bezugszeichenliste

- 1: Leitschaufelkranz
- 2: Strömungsmaschine
- 4: Leitschaufeln
- 6: Innenring
- 10: Schaufelblatt
- 12: äußere Schaufelteller
- 14: inneren Schaufelteller
- 15: Tellerfläche
- 16: Verstellzapfen
- 17: Tellerfläche
- 18: Ringraum
- 19: Hinterkante
- 20: Rotorabschnitt
- 21: Vorderkante
- 22: vorderes Ringsegment
- 24: hinteres Ringsegment.
- 26: Lagerausnehmung
- 28: Flansch
- 30: Flansch
- 32: Flanschbohrung
- 34: Verbindungselement
- 35: Erweiterung
- 36: Grund / Bodenfläche
- 38: Innenumfangsfläche / Lagerflächen
- 40: Außenumfangsfläche / Lagerfläche
- 42: Stirnfläche
- 44: Hohlraum
- 46: Verlängerung
- 48: Segmentenfläche
- 50: Endabschnitt
- 52: Dichteinrichtung
- 54: Haltering
- 56: Fußabschnitt
- 58: Verbindungsabschnitt
- 60: Dichtungsabschnitt
- 62: Ringnut
- 64: Sockelfläche
- 66: Bohrung
- 68: stromaufwärtiger Vorsprung
- 70: Dichtsteg
- 72: Laufschaufelreihe
- 74: Sekundärstromzuführung
- 76: Aufnahne

## Patentansprüche

1. Verstellbarer Leitschaufelkranz (1) einer Strömungsmaschine (2), mit einer Vielzahl von eine Leitschaufelreihe bildenden Leltschaufeln (4) und mit einem Innenring (6) zum Stabilisieren der Leitschaufeireihe, wobei die Leitschaufeln (4) jeweils einen bezogen auf eine Kranzlängsachse radial äußeren Verstellzapfen zum Zusammenwirken mit einer Verstelleinrichtung haben, und wobei die Leitschaufeln (4) mit jeweils einem radial inneren Schaufelteller (14) in Lagerausnehmungen (26) des Innenrings (6) aufgenommen sind, wobei eine radiale Schaufeltellerhöhe stromabwärts eines Primärstroms zunimmt und die Schaufelblätter (10) einen hinterkantenseitigen Überhang haben,
**dadurch gekennzeichnet, dass**
die radial inneren Schaufelteller (14) lagerzapfenfrei ausgebildet sind und als Lagerzapfen wirken, wobei die geringste Schaufeltellerdicke zwischen 15% bis 30% des Schaufeltellerdurchmessers beträgt und wobei sie und/oder die Lagerausnehmungen (26) an ihren Lagerflächen (36, 38,40) beschichtet sind.

2. Leitschaufelkranz nach Anspruch 1, wobei die radial inneren Schaufelteller (14) über ihre radiale Höhe eine zylinderförmige Lagerfläche haben.

3. Leitschaufelkranz nach Anspruch 1 oder 2, wobei die Schaufelteller (14) vom Grund (36) der Lagerausnehmungen (26) beabstandet sind.

4. Leitschaufelkranz nach einem der vorhergehenden Ansprüche, wobei der Innenring (6) axial geteilt ist und ein vorderes Ringsegment (22) und ein hinteres Ringsegment (24) aufweist, in denen jeweils hälftig die Lagerausnehmungen (26) ausgebildet sind.

5. Leitschaufelkranz nach einem der vorhergehenden Ansprüche, wobei die Ringsegmente (22, 24) jeweils zumindest einen zu den Lagerausnehmungen (26) radial nach innen versetzten Flansch (28, 30) zum gegenseitigen Zusammenfügen aufweisen.

6. Leitschaufelkranz nach einem der vorhergehenden Ansprüche, wobei das hintere Ringsegment (24) stromabwärts einen sich von einer primärstromseitigen Segmentenfläche (48) radial nach innen weisenden Endabschnitt (50) hat.

7. Leitschaufelkranz nach Anspruch 6, wobei ein Radialspalt zwischen dem Endabschnitt (50) und einem gegenüberliegenden Rotorabschnitt (20) durch eine Dichteinrichtung (52) geschlossen ist.

8. Leitschaufelkranz nach Anspruch 7, wobei die Dichteinrichtung (52) mittels eines an dem Innenring (4) angeordneten Halterings (54) lagegesichert ist.

9. Leitschaufelkranz nach einem der vorhergehenden Ansprüche, wobei das vordere Ringsegment (22) einen stromaufwärtigen Vorsprung (68) zur axialen Überlappung mit einem Körperabschnitt (70) einer stromaufwärtigen Laufschaufelreihe (72) der Strömungsmaschine (2) hat.

10. Leitschaufelkranz nach einem der vorhergehenden Ansprüche, wobei sich durch den Innenring (6) eine Sekundärstromzuführung (74) erstreckt, die saugseitig und/oder druckseitig aus zumindest einigen der Schaufelteller austritt.

11. Leitschaufelkranz nach einem der vorhergehenden Ansprüche, wobei zumindest einige Schaufelteller (14) einen Hohlraum (44) aufweisen.

12. Leitschaufel (4) für einen verstellbaren Leitschaufelkranz (1) nach einem der vorhergehenden Ansprüche.

13. Innenring (6) für einen verstellbaren Leitschaufelkranz (1) nach einem der Ansprüche 1 bis 8.

14. Strömungsmaschine (2) mit einem verstellbaren Leitsehaufelkranz (1) nach einem der Ansprüche 1 bis 11.

## Claims

1. An adjustable guide blade assembly (1) of a fluid flow engine (2), with a plurality of guide blades (4) forming a guide blade row, and with an inner ring (6) for stabilizing the guide blade row, wherein the guide blades (4) each have an adjusting pin, which is positioned radially outside with respect to the assembly longitudinal axis, for interacting with an adjusting device, and wherein the guide blades (4) are housed, with a respective radially inner blade plate (14), inside bearing recesses (26) of the inner ring (6), wherein a radial blade plate height increases in a downstream direction of a primary flow and the blade airfoils (10) have an overhang on the trailing edge side,
**characterized in that**
the radially inner blade plates (14) have no bearing pin and act as bearing pins, wherein the smallest blade plate thickness is between 15% and 30% of the blade plate diameter and wherein the same and/or the bearing recesses (26) are coated on their respective bearing surfaces (36, 38, 40).

2. The guide blade assembly according to claim 1, wherein the radially inner blade plates (14) have a cylindrical bearing surface along their radial height.

3. The guide blade assembly according to claim 1 or 2, wherein the blade plates (14) are distanced from the ground (36) of the bearing recesses (26).

4. The guide blade assembly according to any one of the preceding claims, wherein the inner ring (6) is axially divided and has a front ring segment (22) and a rear ring segment (24), respectively, in which a corresponding half of the bearing recesses (26) is formed.

5. The guide blade assembly according to anyone of the preceding claims, wherein the ring segments (22, 24) have at least one respective flange (28, 30), which is offset radially inwards with respect to the bearing recesses (26), for mutual assembly.

6. The guide blade assembly according to anyone of the preceding claims, wherein the rear ring segment (24) has an end portion (50) on the downstream side, which is directed radially inwards from a segment surface (48) on the primary flow side.

7. The guide blade assembly according to claim 6, wherein a radial gap between the end portion (50) and a facing rotor portion (20) is closed by a sealing device (52).

8. The guide blade assembly according to claim 7, wherein the sealing device (52) is fixed in position by means of a mounting ring (54), which is positioned on the inner ring (4).

9. The guide blade assembly according to anyone of the preceding claims, wherein the front ring segment (22) has an upstream protrusion (68) for axially overlapping a body portion (70) of an upstream rotor blade row (72) of the fluid flow engine (2).

10. The guide blade assembly according to any one of the preceding claims, wherein a secondary flow inlet (74) extends through the inner ring (6), wherein said flow inlet exits on the intake side and/or on the pressure side from at least some of the blade plates.

11. The guide blade assembly according to anyone of the preceding claims, wherein at least some of the blade plates (14) have a cavity (44).

12. A guide blade (4) for an adjustable guide blade assembly (1) according to anyone of the preceding claims.

13. An inner ring (6) for an adjustable guide blade assembly (1) according to anyone of claims 1 to 8.

14. A fluid flow engine (2) with an adjustable guide blade assembly (1) according to anyone of claims 1 to 11.

## Revendications

1. Couronne d'aubes directrices réglable (1) d'une turbomachine (2), comprenant une pluralité d'aubes directrices (4) formant une rangée d'aubes directrices et un anneau interne (6) pour stabiliser la rangée d'aubes directrices, dans laquelle les aubes directrices (4) ont respectivement une broche de réglage radialement externe par rapport à un axe longitudinal de la couronne pour coopérer avec un dispositif de réglage, et dans laquelle les aubes directrices (4) sont reçues avec respectivement une plateforme d'aube radialement interne (14) dans des cavités de paliers (26) de l'anneau interne (6), dans laquelle la hauteur de la plateforme d'aube radiale augmente en aval d'un courant primaire et les pales (10) ont un surplomb côté bord de fuite,
**caractérisée en ce que :**
les plateformes d'aubes radialement internes (14) sont conçues sans tourillon et agissent comme des tourillons, dans laquelle la plus petite épaisseur de plateformes d'aubes se situe entre 15 % et 30 % du diamètre des plateformes d'aubes et dans laquelle elles et/ou les cavités de paliers (26) sont revêtues sur leurs surfaces de paliers (36, 38, 40).

2. Couronne d'aubes directrices selon la revendication 1, dans laquelle les plateformes d'aubes radialement internes (14) ont une surface de forme cylindrique sur leur hauteur radiale.

3. Couronne d'aubes directrices selon la revendication 1 ou 2, dans laquelle les plateformes d'aubes (14) sont distantes de la base (36) des cavités de paliers (26).

4. Couronne d'aubes directrices selon l'une quelconque des revendications précédentes, dans laquelle l'anneau interne (6) est divisé axialement et présente un segment d'anneau avant (22) et un segment d'anneau arrière (24), dans lesquels les cavités de paliers (26) sont respectivement ménagées par moitié.

5. Couronne d'aubes directrices selon l'une quelconque des revendications précédentes, dans laquelle les segments d'anneau (22, 24) présentent respectivement au moins une bride (28, 30) décalée radialement vers l'intérieur vers les cavités de paliers (26) en vue de l'assemblage mutuel.

6. Couronne d'aubes directrices selon l'une quelconque des revendications précédentes, dans laquelle le segment d'anneau arrière (24) a en aval une section d'extrémité (50) tournée radialement vers l'intérieur par une surface de segment (48) côté courant primaire.

7. Couronne d'aubes directrices selon la revendication 6, dans laquelle un intervalle radial entre la section d'extrémité (50) et une section de rotor opposée (20) est fermé par un dispositif étanche (52).

8. Couronne d'aubes directrices selon la revendication 7, dans laquelle le dispositif étanche (52) est maintenu en place au moyen d'un anneau de retenue (54) agencé sur l'anneau interne (4).

9. Couronne d'aubes directrices selon l'une quelconque des revendications précédentes, dans laquelle le segment d'anneau avant (22) a une saillie amont (68) chevauchant axialement une section de corps (70) d'une série d'aubes directrice amont (72) de la turbomachine (2).

10. Couronne d'aubes directrices selon l'une quelconque des revendications précédentes, dans laquelle s'étend à travers l'anneau interne (6) une conduite de courant secondaire (74) qui sort d'au moins certaines des plateformes d'aubes côté aspiration et/ou côté refoulement.

11. Couronne d'aubes directrices selon l'une quelconque des revendications précédentes, dans laquelle au moins certaines plateformes d'aubes (14) présentent un espace creux (44).

12. Aube directrice (4) pour une couronne d'aubes directrices réglable (1) selon l'une quelconque des revendications précédentes.

13. Anneau interne (6) pour une couronne d'aubes directrices réglable (1) selon l'une quelconque des revendications 1 à 8.

14. Turbomachine (2) comprenant une couronne d'aubes directrices réglable (1) selon l'une quelconque des revendications 1 à 11.
